# EUROPÄISCHE PATENTSCHRIFT

(11) **EP 3 528 513 B1**
(45) Veröffentlichungstag und Bekanntmachung des Hinweises auf die Patenterteilung: **14.10.2020**
(21) Anmeldenummer: 19153714.1
(22) Anmeldetag: 25.01.2019
(51) Int. Cl.: H04R 25/00

(54) **VERFAHREN ZUR ANPASSUNG VON PARAMETERN EINES HÖRSYSTEMS**
METHOD FOR ADJUSTING THE PARAMETERS OF A HEARING SYSTEM
PROCÉDÉ D'AJUSTEMENT DES PARAMÈTRES D'UN SYSTÈME AUDITIF

(30) Priorität: 16.02.2018 DE 102018202429
(43) Veröffentlichungstag der Anmeldung: 21.08.2019
(73) Patentinhaber: Sivantos Pte. Ltd., Singapore 539775 (SG)
(72) Erfinder: ASCHOFF, Stefan, 90542 Eckental (DE); WEIDNER, Roland, 91330 Eggolsheim (DE); MÜLLER, Markus, 90571 Schwaig (DE)
(74) Vertreter: FDST Patentanwälte

(56) Entgegenhaltungen:
- EP-A1- 3 039 886
- EP-A1- 3 123 355
- EP-A1- 3 435 689
- US-A1- 2010 217 684

## Beschreibung

Die Erfindung bezieht sich auf ein Verfahren zur Anpassung von Parametern eines Hörsystems mit einem Hörhilfegerät und einem Kommunikationsgerät. Weiter betrifft die Erfindung ein Hörsystem mit einem Hörhilfegerät und einem Kommunikationsgerät, wobei die Parameter des Hörsystems anpassbar sind.

Als Hörhilfegerät wird allgemein eine tragbare Hörvorrichtung bezeichnet, die dazu dient, die Wahrnehmung des an das Ohr eines Nutzers anbrandenden Umgebungsschalls zu verbessern. Eine klassischerweise als "Hörgeräte" bezeichnete Unterklasse der Hörhilfegeräte ist zur Versorgung von Personen eingerichtet, die im medizinischen Sinne an einem Hörverlust leiden. Um deren zahlreichen individuellen Bedürfnissen entgegenzukommen, werden unterschiedliche Bauformen von Hörhilfegeräten wie Hinter-dem-Ohr-Hörgeräte (HdO), Hörgeräte mit externem Hörer (RIC, Receiver in the Canal), In-dem-Ohr-Hörgeräte (IdO), oder auch Concha-Hörgeräte oder Kanal-Hörgeräte (ITE, CIC) angeboten. Die beispielhaft aufgeführten Hörgeräte werden am Außenohr oder im Gehörgang getragen. Darüber hinaus stehen auf dem Markt auch Knochenleitungshörhilfen, implantierbare oder vibrotaktile Hörhilfen zur Verfügung. Bei diesen erfolgt die Stimulation des geschädigten Gehörs entweder mechanisch oder elektrisch.

Ein Hörsystem (oder auch Hörhilfesystem) umfasst heutzutage zumeist nicht mehr nur ein solches Hörhilfegerät, sondern auch zusätzliche Kommunikationsgeräte wie einen Computer, ein Tablet oder ein Smartphone, welche üblicherweise drahtlos mit dem Hörhilfegerät verbunden sind. Das oder die jeweiligen Kommunikationsgeräte dienen hierbei vielfach als Benutzerschnittstelle zum Hörgeräteträger und bieten diesem verschiedene Funktionen an. Beispielsweise kann ein Kommunikationsgerät als eine Fernbedienung oder als ein Anzeigegerät für Zustände des Hörhilfegerätes (beispielsweise der Batteriestatus, Einstellungen von Parametern wie Signaltönen oder Ausgaben von statistisch aufbereiteten vom Hörhilfegerat aufgenommenen Daten) genutzt werden. Weiter werden Kommunikationsgeräte als Eingabemedien zur Bewertung der Zufriedenheit mit der Leistung des Hörhilfegerätes, zur Kommunikation mit einem Hörgeräteakustiker oder zur Ankopplung des Kommunikationsgerätes an die Anpasssoftware des Hörgeräteakustikers zu Zwecken der Fernanpassung der Parameter des Hörgerätes eingesetzt.

Insbesondere klassische Hörgeräte umfassen zusätzlich häufig Bauteile, die der akustischen Ankopplung des jeweiligen Hörgerätes an das Ohr des Hörgeräteträgers dienen, also dafür sorgen, dass der abgegebene Schall in das Ohr geführt wird. Diese Bauteile werden gängigerweise von einem ausgebildeten Hörgeräteakustiker an dem Hörgerät angebracht. Solche Anpassstücke liegen typischerweise in einer großen Auswahl vor. Je nach Bauform des Hörgerätes kommen unterschiedliche Teile dafür in Betracht: Bei klassischen HdO-Hörgeräten befindet sich der Hörer (Lautsprecher) im Hörgerätegehäuse. An der Austrittsöffnung wird zunächst ein Schallschlauch angeschlossen, an dessen Ende dann ein kleines Schirmchen befestigt wird, welches das Schlauchende im Gehörgang des Minderhörenden zentriert.

Bei RIC-Hörgeräten befindet sich der Lautsprecher außerhalb des Hörgerätegehäuses mit dem er mit einem dünnen Draht verbunden ist. Um den Lautsprecher in dem Gehörgang zu zentrieren, gibt es verschiedene Ausführungen sogenannter Domes. Aufgrund der unterschiedlich großen Gehörgänge der jeweiligen Hörgeräteträger sind diese mit unterschiedlichen Durchmessern und mit jeweils verschieden großen Belüftungsöffnungen zur Belüftung des inneren Gehörganges erhältlich. Derartige Belüftungsöffnungen sind einerseits notwendig, um eine Belüftung des Gehörganges des Hörgeräteträgers zu gewährleisten. Andererseits ist das Vorhandensein von Belüftungsöffnungen auch mit Nachteilen verbunden, da der vom Hörgerät abgegebene Schall durch die Belüftungsöffnungen zumindest teilweise entweichen kann. Dies hat nicht nur einen Leistungsverlust zur Folge, sondern erhöht gleichermaßen die Rückkopplungsneigung des Hörgerätes. Auch Dämpfungseffekte können eine Rolle spielen, da die Schalleitung in einem Schlauch zwischen einem Hörgerätelautsprecher und einem entsprechenden Anpassstück verlustbehaftet ist.

Ebenso gibt es die Möglichkeit, dass ein Hörgeräteakustiker ein individuelles Ohrpassstück für einen Hörgeräteträger anfertigt, welches er mittels eines Abdruckes einer Knetmasse am Ohr anfertigt. Ein solches Ohrpassstück hat eine ideale Passform, schließt dicht ab und erhält deswegen ebenfalls noch eine Belüftungsbohrung.

Insgesamt hat die Auswahl der Bauteile, die zur akustischen Anpassung des Hörgerätes eingesetzt werden, einen erhebliche Einfluss auf den zum Ohr gelangenden Schall. Die Übertragungsverluste sind dabei frequenzspezifisch werden üblicherweise in Form einer Kurve oder 'Kennlinie' kenntlich gemacht.

Bevor ein Minderhörender erstmalig mit einem Hör(hilfe)gerät ausgestattet wird, wird die notwendige Verstärkung des Hörgerätes unter Berücksichtigung des gemessenen Hörverlusts des Hörgeräteträgers berechnet. Gängig sind hierbei allgemein bekannte Berechnungsformeln wie zum Beispiel DSLI/O, NAL-NL1 oder ähnliches. Zunehmend entwickeln die Hersteller von Hörsystemen aber auch eigene Berechnungsformeln, die zusätzlich(e) Besonderheiten der Hörgeräte aus der herstellereigenen Entwicklung berücksichtigen.

Um die Sollverstärkung eines Hörsystems festzulegen kommen aber auch andere Verfahren in Betracht. So erzielt man in der Praxis auch dann akzeptable Ergebnisse, wenn ein Minderhörender einer Clustergruppe zuordnet wird, der wiederum jeweils eine Sollverstärkung zugeordnet ist. Die Berechnung der Sollverstärkung erfolgt dabei frequenzspezifisch, beispielsweise für die Mittenfrequenz eines jeden Verstärkungskanales des Hörgerätes. Hierbei fallen die Sollverstärkungen für unterschiedlich hohe Eingangspegel unterschiedlich aus, da leise Töne von einem Hörgerät intensiver verstärkt werden sollen als mittlere oder laute Töne (Dynamickompression). Eine Sollverstärkung stellt damit den Quotienten aus dem Ausgangspegel, also dem Schallpegel an der Stelle, an der der Schall das Hörgerät - einschließlich seiner Bauteile zur akustischen Ankopplung - verlässt und dem Eingangspegel, also dem vom Mikrophon des Hörgerätes aufgenommenen Schallpegel dar.

Da die verschiedenen, an dem Hör(hilfe)gerät angeschlossenen Bauteile zur akustischen Ankopplung jedoch unterschiedliche Übertragungsverluste aufweisen, sind deren spezifische Verluste ebenfalls zu berücksichtigen. Die Hörer (Lautsprecher) des Hörgerätes müssen den jeweiligen Verlust kompensieren, die Sollverstärkung muss also um die durch die Bauteile zur akustischen Ankopplung des Hörgerätes (akustische Ankopplungsbauteile) hervorgerufenen Übertragungsverluste beaufschlagt werden. In der Praxis wird eine diesbezügliche Anpassung von Hörgeräteparametern durch ein entsprechendes Anpassprogramm erreicht.

Unabhängig von der Art des Hörgerätes ist die für einen Hörgeräteträger optimale akustische Anpassung nicht immer mit der ersten Auswahl des jeweiligen akustischen Ankopplungsbauteils abgeschlossen. Gegebenenfalls wird ein Austausch oder Wechsel eines zur akustischen Ankopplung eingesetzten Bauteils notwendig, wie beispielsweise bei einem zu lockeren oder auch zu festen Sitz eines Domes mit etwas zu geringem bzw. zu großem Durchmesser. Auch kann der Tragekomfort eines Domes oder eines Ohrpassstückes als unangenehm empfunden werden, weil keine Belüftungsöffnung vorhanden ist und die Haut schwitzt und es sich dann auf Grund der Schweißbildung leichter lockert. Ebenso kann die Belüftungsöffnung zu groß bemessen sein, so dass zu viel von dem tiefen Schall entweicht oder dass der austretende Schall in die Mikrophone einkoppelt und es zu einer unangenehmen Rückkopplung kommt.

Um hier die notwendige Versorgung eines Hörgeräteträgers und eine entsprechende Anpassung des Hörgerätes an das Hörvermögen eines Hörgeräteträgers zu gewährleisten, gibt es verschiedene Möglichkeiten. Entweder kann der Hörgeräteträger die Anpassung seines Hörgerätes bei einem Hörgeräteakustiker vor Ort vornehmen lassen. Dies ist jedoch insbesondere im Hinblick auf eine Terminvereinbarung, die Anfahrt und potentielle Wartezeiten häufig mit einem erhöhten Aufwand verbunden.

Alternativ ist es möglich, dass ein Hörgeräteträger durch einen Hörgeräteakustiker fernbetreut wird. Der Hörgeräteakustiker ist hierbei durch geeignete Technologien wie beispielsweise Systeme zur Fernanpassung von Hörgeräten, Audio- und/oder Video-Übertragung mit dem Hörgeräteträger verbunden. Eine weitere Möglichkeit liegt darin, dass der Hörgeräteträger gar nicht betreut wird oder aber auf Hilfe einer nicht bzw. semi-professionell ausgebildeten Person zurückgreift. Dies können beispielsweise Familienangehörige, Mitarbeiter einer Apotheke oder einer Shopping-Mall oder auch sogenannte 'Barfußdoktoren' sein, die sich im Rahmen einer kurzen Grundausbildung hinsichtlich der Assemblierung und Anpassung von Hörgeräten weitergebildet haben.

Bei den vorbeschriebenen Anwendungsfällen stößt die Assemblierung schnell an praktische Grenzen. Wenn ein Hörgeräteakustiker den Hörgeräteträger beispielsweise per Video-Übertragung betreut besteht zwar die Möglichkeit, dass die Ankopplungsstücke am Ort des Hörgeräteträgers an das Hörgerät angefügt werden. Die Informationsübertragung an den Hörgeräteakustiker, welche Bauteile genau angeschlossen wurden, ist immer mit einem Risiko behaftet. Der Hörgeräteträger kann zwar aus einem ihm zur Verfügung gestellten Sortiment mit verschiedenen Ankopplungsstücken das von ihm ausgewählte Bauteil benennen. Fehlerhafte Anschlüsse oder Verwechslungen von Bauteilen können jedoch nicht ausgeschlossen werden.

Auch wenn der Hörgeräteträger das jeweilige Ankopplungsbauteil mittels einer Webcam aufnimmt und einem betreuenden Hörgeräteakustiker übermittelt, können eine unpassende Ausrichtung der Kamera, unzureichende Beleuchtungsverhältnisse oder auch die Begrenzung der Auflösung der Webcam es für den betreuenden Hörgeräteakustiker schwierig machen, ein zur Ankopplung ausgewähltes Bauteil zuverlässig seiner eindeutigen Produktbezeichnung zuzuordnen.

Mit noch größerer Wahrscheinlichkeit von Falschangaben ist zu rechnen, wenn kein professioneller Hörgeräteakustiker den Hörgeräteträger betreut, sondern eine ungeschulte oder semi-professionell arbeitende Person wie ein Apothekenangestellter oder ein Barfußdoktor. Diese Personen sind mit dem Sortiment der Bauteile eines Herstellers weniger vertraut, als ein vollzeitig tätiger Hörgeräteakustiker, der sich ausschließlich mit der Anpassung von Hörgeräten befasst. Die Vertrautheit mit dem Sortiment der Ankopplungsbauteile ist hierbei umso geringer, je mehr der Hersteller auf Grund von Modellwechseln neue Bauteile und Bauteileformen auf den Markt bringt. Entsprechend ist die Gefahr der Wahl eines falschen akustischen Ankopplungsbauteils bzw. eine nicht fachgerechte Anordnung an einem Hör(hilfe)gerät groß.

Auch ein eventuelles Aufdrucken von Produktbezeichnungen oder Produktcodes ist aufgrund der geringen Abmessungen der Teile und des zu deren Fertigung eingesetzten Materials (vielfach weicher und transparenter Kunststoff) unpraktikabel.

Aus der EP 3 039 886 A1 ist ein Verfahren zum benutzerspezifischen Anpassen eines Hörgerätes mittels eines Kommunikationsgerätes bekannt, wobei mittels einer Bildaufnahme eines am Hörgerät angebrachten QR-Codes durch das Kommunikationsgerät eine Produktinformation über das Hörgerät ermittelt werden kann, und entsprechend der Produktinformation durch das Kommunikationsgerät von einem Server Daten für die Anpassung des Hörgerätes bezogen werden können.

Die EP 3 123 355 A1 offenbart, für ein Hörgerät eine Datenverbindung mit einem Mobilgerät zu verbinden, sodass auf einem Display des Mobilgerätes Informationen über das Hörgerät, beispielsweise Daten einer im Hörgerät geloggten Benutzer-Historie, dargestellt werden können. Über das Mobilgerät ist zusätzlich eine Internet-Verbindung herstellbar, über welche weitre Daten bezogen werden können.

Die US 2010 / 0 217 684 A1 nennt ein System und ein Verfahren zum Bereitstellen von Diensten, die einem Bild zugeordnet sind. Das Verfahren umfasst das Empfangen von Bilddaten eines interessierenden Elements von einem Clientgerät. Die Bilddaten werden verwendet, um einen ähnlichen Artikel aus einem Bildkatalog anhand der Bilddaten des Artikels zu identifizieren. Attributinformationen, die dem ähnlichen Element zugeordnet sind, werden abgerufen und zum Vorausfüllen einer Vorlage verwendet. Die vorab ausgefüllte Vorlage wird an das Clientgerät gesendet, und geänderte Daten vom Clientgerät werden als Antwort empfangen, wobei die geänderten Daten zu einer endgültigen Vorlage führen. Eine Liste basierend auf der endgültigen Vorlage wird generiert.

Die vorstehend beschrieben Verfahren sind somit nur begrenzt zur Anpassung eines Hörhilfesystems geeignet. Der Erfindung liegt daher die Aufgabe zugrunde einem Hörgeräteträger eine nutzerfreundliche und im Wesentlichen fehlerfreie Einstellung von Parametern seines Hörgerätes zu ermöglichen.

Diese Aufgabe wird erfindungsgemäß gelöst durch ein Verfahren mit den Merkmalen des Anspruchs 1 und ein Hörsystem mit den Merkmalen des Anspruchs 1 4.

Vorteilhafte und teils für sich gesehen erfinderische Ausgestaltungsformen und Weiterentwicklungen sind in den Unteransprüchen und der nachstehenden Beschreibung dargelegt.

Im Rahmen des erfindungsgemäßen Verfahrens zur Anpassung von Parametern eines ein Hörhilfegerät und ein von diesem getrenntes Kommunikationsgerät umfassenden Hörsystems wird mittels einer Kamera des Kommunikationsgerätes zumindest ein Bild von zumindest einem Bauteil zur akustischen Ankopplung des Hörgeräts an das Ohr eines Hörgeräteträgers aufgenommen und anhand des oder jedes aufgenommenen Bildes die Produktidentität des oder jedes Bauteils identifiziert. Schließlich werden dem oder jedem identifizierten Bauteil akustische Übertragungskennlinien zugeordnet, auf deren Basis die Anpassung der Parameter des Hörsystems erfolgt. Durch ein solches erfindungsgemäßes Verfahren ist eine fachgerechte Assemblierung auch dann sichergestellt, wenn kein professionell ausgebildeter Hörgeräteakustiker vor Ort ist. Zumindest für den regulären Betrieb des Hörhilfegerätes wird das oder jedes Bauteil am Hörhilfegerät angebracht. In einer vorteilhaften Ausgestaltung des Verfahrens kann das oder jedes Bauteil auch für die Aufnahme des zumindest einen Bildes an das Hörhilfegerät angebracht werden.

Im Rahmen des Verfahrens werden zweckmäßigerweise die Parameter des Hör(hilfe)gerätes, also des im und/oder am Ohr eines Hörgeräteträgers positionierten Teils des Hörsystems an das Hörvermögen des jeweiligen Hörgeräteträgers angepasst. Als Bauteile zur akustischen Ankopplung des Hörgeräts an das Ohr eines Hörgeräteträgers werden - je nach Ausbildung des Hörgerätes - vorzugsweise Schallschläuche mit Domes und/oder Ohrpassstücke eingesetzt. Das Hörgerät wird auf diese Weise speziell für den nutzerspezifischen Gebrauch assembliert.

Um ein Bauteil zur akustischen Ankopplung gemäß der vorliegenden Erfindung zu identifizieren, wird eine Kamera des Kommunikationsgerätes des Hörsystems genutzt. Mittels der Kamera des Kommunikationsgerätes wird zumindest ein Bild von dem oder jedem zur akustischen Ankopplung eingesetzten Bauteil aufgenommen. Als Kommunikationsgerät ist erfindungsgemäß vorzugsweise ein Smartphone Teil des Hörsystems. Alternativ oder zusätzlich können im Rahmen der Erfindung beispielsweise auch ein Computer oder ein Tablet als Teil des Hörsystems eingesetzt sein, mittels welchen eines oder mehrere Bilder von dem oder jedem zur akustischen Ankopplung eingesetzten Bauteil aufgenommen werden.

Anhand des oder jedes aufgenommenen Bildes wird dann die Produktidentität des oder jedes Bauteils identifiziert. Hierzu wird das oder jedes aufgenommene Bild vorzugsweise über das Internet an einen Server oder an eine Cloud übertragen. Die Übertragung erfolgt bevorzugt automatisch. Zweckmäßigerweise werden dann mittels einer auf dem Server oder in der Cloud gespeicherten Bilderkennungssoftware die Produktidentitäten der jeweiligen zur akustischen Ankopplung an dem Hörgerät angebrachten Bauteile identifiziert. Auch diese Identifizierung erfolgt im Rahmen der Erfindung vorzugsweise automatisch. Alternativ hierzu kann die Bilderkennung auf dem Kommunikationsgerät erfolgen, und dabei bevorzugt mittels eines künstlichen neuronalen Netzes implementiert sein, in welchem die verschiedenen Produktidentitäten und ihre Zuordnungen anhand von Verbindungen zwischen einzelnen Neuronen des künstlichen neuronalen Netzes hinterlegt sind.

In einer vorteilhaften Ausgestaltung des Verfahrens wird an das Hörhilfegerät zuerst das zumindest eine Bauteil zur akustischen Ankopplung des Hörgeräts an das Ohr eines Hörgeräteträgers angebracht. Dann wird mittels der Kamera des Kommunikationsgerätes das zumindest eine Bild von dem oder jedem zur akustischen Ankopplung eingesetzten Bauteil aufgenommen und anhand des oder jedes aufgenommenen Bildes die Produktidentität des oder jedes Bauteils identifiziert. Dies hat den Vorteil, dass das Hörhilfegerät im Rahmen des Anpassungsprozesses gleich getragen und somit die Anpassung unmittelbar getestet werden kann, falls ggf. noch eine Feinabstimmung erforderlich ist, z.B. infolge anatomischer Besonderheiten des Gehörganges des Hörgeräteträgers. Überdies lässt sich für ein Bauteil im am Hörhilfegerät angebrachten Zustand über das Hörhilfegerät leichter eine für die Bilderkennung besonders geeignete Standardposition definieren, was zur Vereinfachung der Bilderkennung beitragen kann.

In einer alternativen Ausgestaltung wird das zumindest eine Bild von dem oder jedem Bauteil aufgenommen, während das oder jedes Bauteil vom Hörhilfegerät getrennt ist. Dieses Vorgehen hat den Vorteil, dass dem Bild keine für die Identifizierung besonders relevanten Details durch das Hörhilfegerät verdeckt werden.

Die Bilderkennungssoftware erkennt die auf dem oder jedem übertragenen Bild gezeigten Bauteile und vergleicht dann das oder jedes erkannte Bild mit Bildern in einem elektronischen Produktkatalog. Auch dieser Verfahrensschritt erfolgt vorzugsweise automatisch. Der elektronische Produktkatalog ist zweckmäßigerweise ebenfalls auf dem Server oder in der Cloud hinterlegt. Alternativ dazu kann der elektronische Produktkatalog auch im Kommunikationsgerät hinterlegt sein. Der elektronische Produktkatalog wird zweckmäßigerweise regelmäßig automatisch aktualisiert. So wird sichergestellt, dass der Produktkatalog immer aktuell ist und auch von einem Hörgerätehersteller neu auf den Markt gebrachte Produkte in diesem hinterlegt sind.

Die Produktidentität des oder jedes Bauteils wird erfindungsgemäß anhand des oder jedes aufgenommenen Bildes insbesondere auf dem Kommunikationsgerät mittels eines dort implementierten künstlichen neuronalen Netzes identifiziert, über welches der elektronischer Produktkatalog hinterlegt ist. Dadurch besteht die Möglichkeit, eine Bilderkennung für die Identifizierung der Produktidentität vorzunehmen, ohne dass das oder jedes zu analysierende Bild zuerst per Internet auf einen Server übertragen werden müsste. Gerade dann, wenn nur eine geringe Datenübertragungsrate zur Verfügung steht, die eine Bildübertragung für den Anwender als unangenehm zeitaufwändig erscheinen lassen könnte, ist eine Klassifizierung von Bildern auf dem Kommunikationsgerät vorteilhaft. Insbesondere kann dabei das Kommunikationsgerät als ein Smartphone oder ein Tablet ausgestaltet, auf welchem eine entsprechende Applikation zur Identifizierung der Produktidentität des zumindest einen Bauteils anhand des oder jedes Bildes installiert ist. Vorzugsweise ist selbige Applikation mit einer weiteren Applikation zur Anpassung des Hörhilfegerätes über eine entsprechende Schnittstelle gekoppelt, oder als Teil dieser implementiert.

Zur Erkennung der Produktidentitäten ist dabei auf dem Kommunikationsgerät ein künstliches neuronales Netz implementiert. Ein solches künstliches neuronales Netz ist dabei in seiner Konstruktion an ein Gehirn als biologisches Vorbild angelehnt. Daher enthalten es eine Vielzahl von Schaltkreisen, die Neurone imitieren (und daher auch als Neuronen des künstlichen neuronalen Netzes bezeichnet werden), sowie eine Mehrzahl von Verbindungen, die Synapsen (die Verbindungen zwischen den Neuronen) imitieren.

Einer Vielzahl an Topologien, also der Arrangements, wie die Neuronen der künstlichen neuronalen Netzes miteinander in Verbindung gesetzt sind, ist dabei gemeinsam, dass sie eine Mehrzahl von Schichten an Neuronen aufweisen, wobei eine Eingangsschicht von Neuronen Signale von außerhalb des künstlichen neuronalen Netzes jeweils als Eingabe aufnimmt und eine Ausgangsschicht von Neuronen Signale als Ergebnisse nach außen abgibt. Hierbei kann eine Anzahl von weiteren Schichten zwischen der Eingabeschicht und der Ausgabeschicht. Die Anzahl an Neuronen in den einzelnen Schichten sowie die jeweilige Komplexität der Schichten ist hierbei maßgeblich für die Leistungsfähigkeit des künstlichen neuronalen Netzes, gestellte Aufgaben bewältigen zu können.

Signale, welche von einzelnen Bildelementen eines Bildsensors im Kommunikationsgerät abgegebenen werden, werden dabei der Eingangsschicht zugeführt. Die Signalstärken von an den Neuronen der Ausgangsschicht ausgegebenen Ausgangssignalen repräsentieren dabei das Identifikationsergebnis: Eine Neurone der Ausgangsschicht repräsentiert dabei eines der möglichen Identifikationsergebnisse.

Verschiedene Produkte des elektronischen Produktkatalogs, und bevorzugt jeweils unterschiedliche Bilddarstellungen eines jeden Produktes, sind dabei über Verbindungen zwischen einzelnen Neuronen und/oder oder einzelne Neuronen einer Ausgangsschicht des künstlichen neuronalen Netzes hinterlegt. Die Gesamtheit dieser Verbindungen kann dabei zur Implementierung des dem Produktkatalog entsprechenden künstlichen neuronalen Netzes auf das Kommunikationsgerät übertragen werden.

Günstigerweise wird dabei das künstliche neuronale Netz im Kommunikationsgerät mittels wenigstens eines neuromorphen Chips implementiert. Neuromorphe Chips sind Mikrochips, welche infolge ihrer physikalischen Schaltkreis-Topologie für eine Implementierung von künstlichen neuronalen Netzen besonders geeignet sind. Insbesondere kann dabei eine physikalische Implementierung wenigstens einer Schicht aus Neuronen sowie einer Vielzahl an in physikalischen Verbindungen zwischen diesen eingerichtet sein. Weiter kann der neuromorphe Chip einen Speicher umfassen oder mit einem solchen verbunden sein, in welchem zur Implementierung eines konkreten künstlichen neuronalen Netzes die Kopplungsstärken der einzelnen Verbindungen des zu implementierenden Netzes hinterlegt sind, sodass diese insbesondere schichtweise in den physikalischen Verbindungen des neuromorphen Chips implementiert werden können.

Neuromorphe Chips werden derzeit in den ersten auf dem Markt erhältlichen Smartphone-Modellen eingesetzt, wobei davon auszugehen ist, dass in naher Zukunft eine breitere Verfügbarkeit im betreffenden Marktsegment eintreten dürfte, und auch der Einsatz von neuromorphen Chips in Tablets folgen sollte. Somit stehen die neuromorphen Chips derzeit für besagte Smartphone-Modelle, in naher Zukunft wohl für deutlich mehr Modelle, und dann wohl auch für eine Vielzahl an Tablet-Modellen zur Verfügung.

Bevorzugt werden in einer Trainingsphase getrennt vom Hörsystem jeweils Bilder der Produkte des elektronischen Produktkatalogs aufgenommen, wobei ein generisches künstliches neuronales Netz für eine Bilderkennung der jeweiligen Produkte in den aufgenommenen Bildern eingerichtet wird, und hierdurch ein erstes neuronales Muster-Netz justiert und implementiert wird, wobei die Topologie und/oder Verbindungen zwischen einzelnen Neuronen des ersten neuronalen Muster-Netzes in einer ersten Datei gespeichert werden, wobei die erste Datei auf das Kommunikationsgerät übertragen wird, und wobei im Kommunikationsgerät das künstliche neuronale Netz des Kommunikationsgerätes gemäß der auf der ersten Datei gespeicherten Topologie bzw. den Verbindungen des ersten neuronalen Muster-Netzes implementiert wird, und hierdurch im Kommunikationsgerät der elektronische Produktkatalog hinterlegt wird.

In der Trainingsphase werden dabei die Übertragungseigenschaften, also insbesondere die "Übertragungsgewichte" der Verbindungen zwischen den Neuronen des ersten neuronalen Muster-Netzes konfiguriert. Dies kann insbesondere dadurch erfolgen, dass das generische künstliche neuronale Netz iterativ durch eine Bilderkennung der einzelnen Produktidentitäten anhand von entsprechenden Bildaufnahmen durchgeführt wird, wobei Fehler in der Erkennung für einen nachfolgenden Iterationsschritt korrigiert werden. Die Bildaufnahmen werden dabei der Eingangsschicht des generischen künstlichen neuronalen Netzes zugeführt, und es erfolgt während der Trainingsphase eine laufende Überprüfung, ob an der Ausgangsschicht des generischen künstlichen neuronalen Netzes die korrekte Produktidentität ausgegeben wird. Durch eine entsprechende Korrektur der Ausgabe im Fehlerfall ("backpropagation") werden dabei insbesondere die "Übertragungsgewichte" der Verbindungen für die vorgesehene Anwendung justiert. Insbesondere wird hierdurch das für eine Erkennung der Produktidentitäten der im Produktkatalog vertretenen Produkte "trainierte" erste neuronale Muster-Netz implementiert.

Die genannten Konfigurationen können ausgelesen werden, sodass ein anderes künstliches neuronales Netz durch ein Implementieren derselben Topologie und derselben Konfiguration in den "trainierten Zustand" versetzt wird, also dabei das erste neuronale Muster-Netz reproduziert wird. Somit kann das künstliche neuronale Netz des Kommunikationsgerätes über die erste Datei die Konfiguration des ersten neuronalen Muster-Netzes implementieren, und dadurch auf dessen "Trainingsfortschritt" zugreifen. Die erste Datei kann dabei insbesondere durch den Hersteller des Hörhilfegerätes auf einem Server hinterlegt sein, von wo aus sie durch den Hörgeräteträger heruntergeladen werden kann.

Für eine Änderung des elektronischen Produktkataloges wird, insbesondere analog zur eben beschriebenen Weise, bevorzugt ein dem geänderten elektronischen Produktkatalog entsprechendes, zweites neuronales Muster-Netz erzeugt, dessen Topologie und/oder Verbindungen in einer zweiten Datei gespeichert werden, wobei die zweite Datei auf das Kommunikationsgerät übertragen wird, und wobei durch eine Implementierung des zweiten neuronalen Muster-Netzes im Kommunikationsgerät anhand der zweiten Datei der elektronische Produktkatalog im Kommunikationsgerät geändert wird. Hierdurch lässt sich der Produktkatalog durch ein einfaches Herunterladen der zweiten Datei aktualisieren.

Zweckmäßigerweise werden die akustischen Übertragungskennlinien für das oder jedes identifizierte Bauteil in dem elektronischen Produktkatalog aufgefunden. Mit anderen Worten sind die akustischen Übertragungskennlinien in dem elektronischen Produktkatalog hinterlegt und werden nach der Identifizierung des jeweiligen Bauteils diesem - insbesondere automatisch - zugeordnet.

Die akustischen Übertragungskennlinien für das oder jedes identifizierte Bauteil werden im Rahmen der Erfindung dann anschließend auf das Kommunikationsgerät übertragen. Die Übertragung erfolgt zweckmäßigerweise via Internet und insbesondere ebenfalls automatisch, also ohne eine zusätzlich Handlung des Hörgeräteträgers bzw. des Trägers des Hörsystems. Die akustischen Übertragungskennlinien werden dann vorteilhafterweise von dem Kommunikationsgerät an das Hörgerät des Hörsystems übertragen und dort gespeichert. Auch diese Übertragung und anschließenden Speicherung erfolgen zweckmäßigerweise automatisch. Erfolgt die Bilderkennung für die Identifizierung des oder jedes zur akustischen Ankopplung vorgesehenen bzw. angebrachten Bauteils lokal im Kommunikationsgerät, so können die Übertragungskennlinien, jeweils einzelnen Produktidentitäten aus dem elektronischen Produktkatalog zugeordnet, bevorzugt vorab auf das Kommunikationsgerät übertragen und dort in einem Speicher hinterlegt werde.

Zusätzlich wird in vorteilhafter Ausgestaltung der Erfindung eine Verstärkungskennlinie für das Hörgerät des Hörsystems berechnet, und insbesondere auch auf dieses übertragen. Die Berechnung der Verstärkungskennlinie erfolgt zweckmäßigerweise mittels einer entsprechenden Anpasssoftware. In einer bevorzugten Variante der Erfindung ist diese Anpasssoftware ebenfalls auf dem Kommunikationsgerät gespeichert. Die Verstärkungskennlinie für das Hörgerät wird in diesem Fall also mittels des Kommunikationsgerätes berechnet.

Alternativ bevorzugt wird die Verstärkungskennlinie von einer Anpasssoftware berechnet, die auf dem Computer eines Hörgeräteakustikers installiert ist und die via Internet mit dem Kommunikationsgerät des Hörsystems des Hörgeräteträgers verbunden ist. Weiter von Vorteil im Rahmen der Erfindung ist es, wenn die Berechnung der Verstärkungskennlinie von einem Cloud-Service bzw. einer dort hinterlegten Anpasssoftware durchgeführt wird, die mittels eines Web-Browsers über das Internet erreichbar ist. Dieses Vorgehen ist insbesondere von Vorteil, wenn auch die Bilderkennung des oder jedes zur akustischen Ankopplung vorgesehenen bzw. angebrachten Bauteils in einem, insbesondere in demselben Cloud-Service erfolgt. Jedoch ist auch eine Verwendung in Kombination mit einer lokalen Bilderkennung auf dem Kommunikationsgerät nicht ausgeschlossen. Bevorzugt werden in diesem Fall die für die Berechnung der Verstärkungskennlinien erforderlichen Daten hinsichtlich der Produktidentität des oder jedes Bauteils vom Kommunikationsgerät auf den Server des Cloud-Services übertragen.

Zweckmäßigerweise wird eine Beaufschlagung der Übertragungseigenschaften der am Hörgerät angeschlossenen Bauteile zur akustischen Ankopplung nicht in die Berechnung der Verstärkungskennlinie einbezogen. Hierbei liegt der Berechnung der Sollverstärkung des Hörgerätes, also der Verstärkungskennlinie ein insbesondere vereinfachter Anpassalgorithmus zugrunde, da dieser keine Kurvenarithmetik vornehmen muss, um die Sollverstärkung mit den Übertragungskennlinien der akustischen Ankopplungsteile zu beaufschlagen.

In einer bevorzugten Ausgestaltung der Erfindung wird die mittels der Anpasssoftware berechnete Verstärkungskennlinie auf das Hörgerät übertragen. Die Übertragung erfolgt zweckmäßigerweise entweder ausgehend von dem Kommunikationsgerät, einem Computer eines Hörgeräteakustikers oder ausgehend von einem Server oder eine Cloud.

Anhand der akustischen Übertragungskennlinien und der Verstärkungskennlinie wird dann vorzugsweise eine korrigierte Verstärkungskennlinie für das Hörgerät berechnet. Die Berechnung der korrigierten Verstärkungskennlinie erfolgt zweckmäßigerweise im Hörgerät durch ein Aufaddieren der akustischen Übertragungskennlinien der Ankopplungsbauteile auf die von der Anpasssoftware berechnete Verstärkungskennlinie. Die tatsächliche Verstärkung des Hörgerätes wird vorzugsweise anhand dieser korrigierten Verstärkungskennlinie angepasst. Das Hörgerät stellt also die Verstärkung entsprechend der neu berechneten, korrigierten Verstärkungskennlinie ein. Die Einstellung der Verstärkung erfolgt vorteilhafterweise ebenfalls automatisch. Die für den Hörgeräte-Anpassalgorithmus genutzten Übertragungskennlinien sind hierbei stets aktuell, da sie direkt vom Hersteller (Server) übertragen werden. Die Berechnung der korrigierten Verstärkungskennlinie kann insbesondere aber auch auf dem Kommunikationsgerät erfolgen, bevorzugt mit einer entsprechenden Applikation zur Anpassung des Hörgerätes, und anschließend auf das Hörgerät übertragen werden.

Günstigerweise wird das zumindest eine Bild von dem Bauteil aufgenommen, während dieses vom Hörgeräteträger nicht am Ohr getragen wird. Dies verbessert einerseits die Bilderkennung, da das oder jedes Bild das Bauteil isoliert oder ggf. in Kombination mit dem Hörhilfegerät, jedoch in jedem Fall ohne optisch komplexen Hintergrund darstellen kann. Andererseits ist eine derartige Bildaufnahme wesentlich komfortabler durchzuführen.

Das erfindungsgemäße Verfahren ermöglicht einem Hörgeräteträger somit eine einfache, aufwandsarme und effektive Anpassung von Parametern seines Hörgerätes. Der Hörgeräteträger selbst hat keinen zusätzlichen Aufwand im Hinblick auf die Assemblierung seines Hörgerätes. Auch ein vor-Ort Termin bei einem Hörgeräteakustiker und/oder die Inanspruchnahme von Hilfe einer externen Person ist nicht notwendig. Sowohl Laien als auch semi-professionell arbeitende Personen können die Assemblierung der akustischen Ankopplungsteile an ein Hörgerät vornehmen, da ihnen das System die Identifikation der angebauten Teile, die Ermittlung deren akustischer Eigenschaften und die Übertragung derselben in den Hörgeräte-Anpassalgorithmus abnimmt.

Das erfindungsgemäße Hörsystem umfasst ein Hörhilfegerät mit zumindest einem Bauteil zur akustischen Ankopplung des Hörhilfegerätes an das Ohr eines Hörgeräteträgers, sowie ein von dem Hörhilfegerät getrenntes Kommunikationsgerät mit einer Kamera zur Aufnahme zumindest eines Bildes von dem oder jedem zur akustischen Ankopplung eingesetzten Bauteil. Das Hörsystem ist zur Identifizierung der Produktidentität des oder jedes Bauteils anhand des oder jedes aufgenommenen Bildes sowie zur Zuordnung von akustischen Übertragungskennlinien zu dem oder jedem vorab identifizierten Bauteil ausgebildet, wobei zur Identifizierung der Produktidentität auf dem Kommunikationsgerät ein künstliches neuronales Netz implementiert ist, anhand dessen ein elektronischer Produktkatalog hinterlegt ist, wobei verschiedene Produkte des elektronischen Produktkatalogs über Verbindungen zwischen einzelnen Neuronen und/oder einzelne Neuronen einer Ausgangsschicht des künstlichen neuronalen Netzes hinterlegt sind, und wobei die Parameter des Hörsystems auf Basis der akustischen Übertragungskennlinien anpassbar sind.

Die für das erfindungsgemäße Verfahren beschriebenen Vorteile und bevorzugten Ausführungsformen gelten gleichermaßen für das erfindungsgemäße Hörsystem und können entsprechend sinngemäß auf dieses übertragen werden.

In einer vorteilhaften Ausgestaltung weist dabei das Kommunikationsgerät einen neuromorphen Chip zur Implementierung des künstlichen neuronalen Netzes auf, anhand dessen der verschiedene Produktidentitäten umfassende elektronische Produktkatalog implementiert ist. Hierdurch lässt sich die Identifizierung der Produktidentität anhand des oder jedes aufgenommenen Bildes unmittelbar auf dem Kommunikationsgerät durchführen, ohne dass ein Zeitverlust für eine etwaige Übertragung des oder jedes Bildes zu einem externen Server entstehen könnte.

Nachfolgend wird ein Ausführungsbeispiel der Erfindung anhand einer Zeichnung näher erläutert. Darin zeigt, jeweils schematisch
- Fig. 1: in einem Blockdiagramm eine Anpassung eines Hörgerätes, wobei ein anzuschließender Schallschlauch mittels Bilderkennung auf einem Server erkannt wird, und akustische Daten für die Anpassung des Schallschlauches vom Server importiert werden, und
- Fig. 2: in einem Blockdiagramm eine alternative Ausgestaltung die Verfahrens nach Fig. 1, wobei die Bilderkennung auf einem Smartphone erfolgt.

Einander entsprechende Teile und Größen sind jeweils durchweg mit einheitlichen Bezugszeichen versehen.

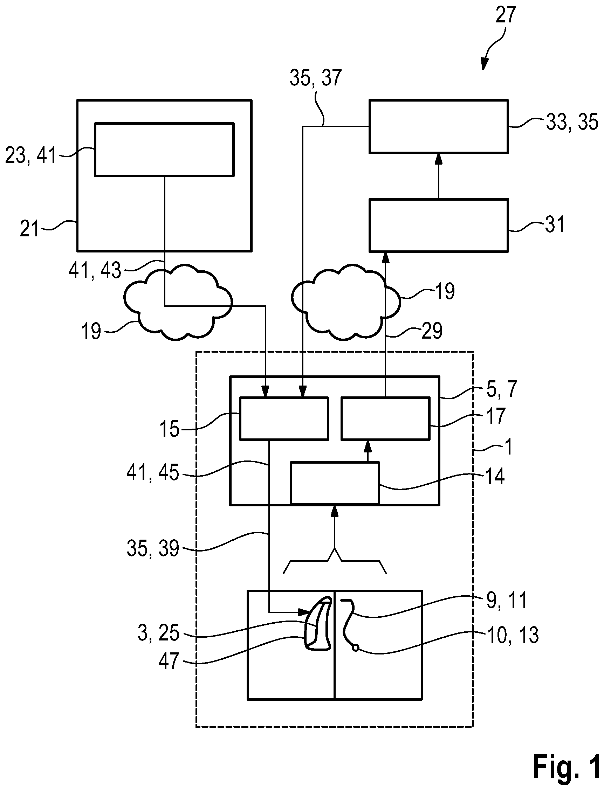

Fig. 1 zeigt ein Hörsystem 1 mit einem Hörgerät 3 und einem drahtlos mit diesem verbundenen, als Smartphone 5 ausgebildeten Kommunikationsgerät 7. Das Hörgerät 3, vorliegend ausgebildet als HdO-Hörgerät ist mit Bauteilen 9, 10 zur akustischen Ankopplung an das Ohr eines Hörgeräteträgers versehen. Hierbei handelt es sich um einen Schallschlauch 11 mit einem Dome 13.

Das Smartphone 5 umfasst eine Kamera 14. Weiter sind auf dem Smartphone 5 Hörgerätetreiber 15 und eine Verbindungssoftware 17 gespeichert. Die Verbindungssoftware 17 erlaubt die Verbindung des Smartphones 5 mit dem Internet (gekennzeichnet durch 19). Weiter ist vorliegend ein Computer 21 eines Hörgeräteakustikers gezeigt, auf welchem eine Anpasssoftware 23 installiert ist. Der Computer 21 ist über das Internet mit dem Smartphone 5 verbunden.

Im Rahmen eines alternativen Verfahrens wird in einem ersten Schritt das Hörgerät 3 für den Gebrauch assembliert, indem zur akustischen Ankopplung an das Hörgerätegehäuse 25 der Schallschlauch 11 mit dem Dome 13 als entsprechende Bauteile 9, 10 zur akustischen Ankopplung angeschlossen werden. Mittels der Kamera 14 des Smartphones 5 werden Bilder von den Bauteilen 9, 10 aufgenommen und die aufgenommenen Bilder via Internet an einen Server 27 übertragen (Übertragungsrichtung gekennzeichnet durch Pfeil 29). Auf dem Server 27 ist eine Bilderkennungssoftware 31 hinterlegt, mittels derer die Produktidentitäten der an dem Hörgerät angeordneten Bauteile 9, 10 identifiziert werden.

In einem ebenfalls auf dem Server 27 hinterlegten elektronischen Produktkatalog 33 werden zu den identifizierten Bauteilen 9, 10 die akustischen Übertragungskennlinien 35 aufgefunden. Die akustischen Übertragungskennlinien 35 werden über das Internet an das Smartphone 5 (Übertragungsrichtung gekennzeichnet durch Pfeil 37) und von diesem an das Hörgerät 3 übertragen (Übertragungsrichtung gekennzeichnet durch Pfeil 39). Die akustischen Übertragungskennlinien 35 werden dann in dem Hörgerät 3 gespeichert.

Weiter wird mittels der auf dem Computer 21 des Hörgeräteakustikers installierten Anpasssoftware 23 eine Verstärkungskennlinie 41 für das Hörgerät 3 berechnet. Eine Beaufschlagung der Übertragungseigenschaften der am Hörgerät 3 angeschlossenen Bauteile 9, 10 zur akustischen Ankopplung wird hier nicht einbezogen. Die berechnete Verstärkungskennlinie 41 wird über das Internet von Computer 21 an das Smartphone 5 (Übertragungsrichtung gekennzeichnet durch Pfeil 43) und von diesem ausgehend an das Hörgerät 3 übertragen (Übertragungsrichtung gekennzeichnet durch Pfeil 45).

Schließlich addiert das Hörgerät 3 die akustischen Übertragungskennlinien 35 des Schallschlauches 11 und des Domes 13 auf die empfangene Verstärkungskennlinie 41 auf und stellt die Verstärkung des Hörgerätes 3 entsprechend der neu berechneten Verstärkungskennlinie 47 ein.

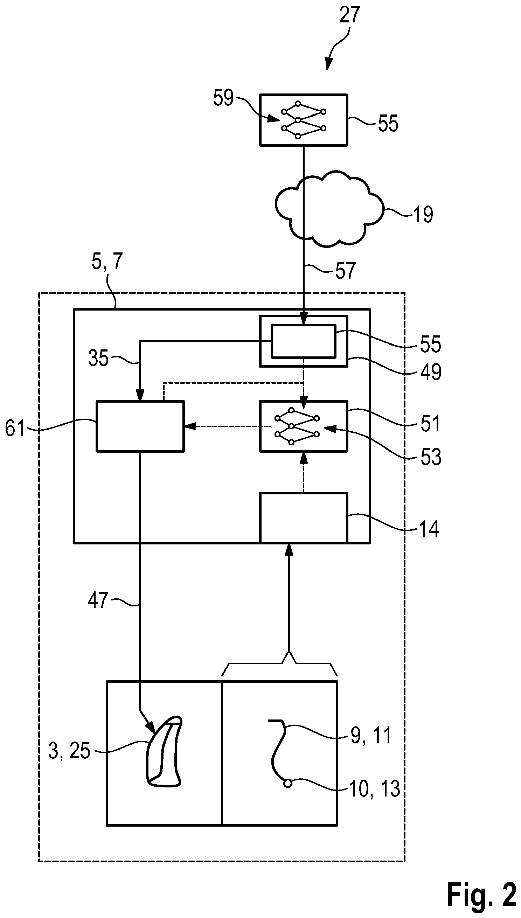

Fig. 2 zeigt das Hörsystem 1 nach Fig. 1, wobei auf dem Smartphone 5 ein nicht-flüchtiger Speicher 49 sowie ein neuromorpher Chip 51 angeordnet sind. Mittels des neuromorphen Chips 51 lässt sich im Smartphone 5 ein künstliches neuronales Netz 53 implementieren. Hierfür wird vom Server 27 über das Internet (gekennzeichnet durch 19) eine erste Datei 55 auf das Smartphone heruntergeladen (Übertragungsrichtung gekennzeichnet durch Pfeil 57), in welcher die vollständige Konfiguration, also insbesondere die Topologie der einzelnen Schichten, die jeweiligen Anzahlen an Neuronen sowie die Verbindungsstärken zwischen einzelnen Neuronen, für ein erstes neuronales Muster-Netz 59 hinterlegt sind. Das erste neuronale Muster-Netz 59 ist dabei von Hersteller in einer nicht näher dargestellten Trainingsphase implementiert worden, und stellt das Trainingsresultat eines generischen künstlichen neuronalen Netzes dar, welches für die Bilderkennung der einzelnen Produkte des Produktkataloges 33 "trainiert" wurde. Durch eine Übertragung der ersten Datei 55 auf das Smartphone 5 und eine dortige Speicherung im nicht-flüchtigen Speicher 49 stehen die das erste neuronale Muster-Netz 59 charakterisierenden Daten nun auch auf dem Smartphone 5 zur Verfügung, sodass bei einer entsprechenden Anwendung durch den neuromorphen Chip 51 für eine Bilderkennung der einzelnen Produkte des Produktkatalogs 33 im Smartphone 5 das künstliche neuronale Netz 53 implementiert werden kann, welches dem ersten neuronalen Muster-Netz 59 entspricht. Hierbei sind zusätzlich auch die den einzelnen Produkten des Produktkatalogs 33 zugeordneten Übertragungskennlinien 35 im nicht-flüchtigen Speicher 49 als Teil der ersten Datei 55 hinterlegt.

Im Rahmen des Verfahrens werden nun mittels der Kamera 14 des Smartphones 5, analog dem in Fig. 1 dargestellten Vorgehen, Bilder von den Bauteilen 9, 10 aufgenommen. Hierbei erfolgt die Bildaufnahme des Schallschlauchs 11 mit dem Dome 13 vorliegend ohne eine vorige Verbindung mit dem Hörgerätegehäuse 25. Je nach Ausgestaltung der ersten Datei kann das zugrunde liegende erste neuronale Muster-Netz 59 jedoch auch hinsichtlich einer Bilderkennung von jeweils mit dem Hörgerätegehäuse 25 verbundenen Bauteilen 9, 10 ausgelegt sein. Mittels der Applikation 61 können anhand der Bildaufnahmen die Produktidentitäten der Bauteile 9, 10 identifiziert werden, wobei die Applikation 61 hierzu die insbesondere die Implementierung des künstlichen neuronalen Netzes 53 steuert, welches dem ersten neuronalen Muster-Netz 59 entspricht, und auf dem neuromorphen Chip 51 anhand der ersten Datei 55 zur Identifizierung der Produktidentitäten des Produktkatalogs 33 implementiert wird. Nach erfolgter Identifizierung der Produktidentität der Bauteile 9, 10 können aus der ersten Datei 55 die zugehörigen Übertragungskennlinien 35 ausgelesen werden. Ggf. können diese auch aus einer der ersten Datei 55 zugeordneten, weiteren Datei (nicht dargestellt) ausgelesen werden, falls eine getrennte Speicherung der Daten für das erste neuronale Muster-netz 59 und die Übertragungskennlinien 35 erfolgt.

Die Berechnung der Verstärkungskennlinie 41 für das Hörgerät 3 kann nun ebenfalls durch die Applikation 61 erfolgen. Eine Beaufschlagung der Übertragungseigenschaften der am Hörgerät 3 angeschlossenen Bauteile 9, 10 zur akustischen Ankopplung wird hier nicht einbezogen. Schließlich addiert die Applikation 61 im Hörgerät 3 die akustischen Übertragungskennlinien 35 des Schallschlauches 11 und des Domes 13 auf die berechnete Verstärkungskennlinie 41 auf und stellt die Verstärkung des Hörgerätes 3 entsprechend der neu berechneten Verstärkungskennlinie 47 und analog zum anhand von Fig. 1 beschriebenen Vorgehen ein. Für den regulären Betrieb des Hörgerätes 3 wird der Schallschlauch 11 zusammen mit dem Dome 13 am Hörgerätegehäuse 25 angebracht. Eine Aktualisierung des auf dem Smartphone hinterlegten Produktkataloges 33 und der entsprechenden Bilderkennung kann durch einfaches Herunterladen einer nicht näher dargestellten zweite Datei vom Server 27 in den nicht-flüchtigen Speicher erfolgen, wodurch das Smartphone dazu befähigt wird, ein zweites neuronales Muster-Netz zu implementieren, welches dem geänderten Produktkatalog entspricht.

### Bezugszeichenliste

- 1: Hörsystem
- 3: Hörgerät
- 5: Smartphone
- 7: Kommunikationsgerät
- 9: Bauteil zur akustischen Ankopplung
- 10: Bauteil zur akustischen Ankopplung
- 11: Schallschlauch
- 13: Dome
- 14: Kamera
- 15: Hörgerätetreiber
- 17: Verbindungssoftware
- 19: Internet
- 21: Computer
- 23: Anpasssoftware
- 25: Hörgerätegehäuse
- 27: Server
- 29: Übertragungsrichtung
- 31: Bilderkennungssoftware
- 33: elektronischer Produktkatalog
- 35: Übertragungskennlinien
- 37: Übertragungsrichtung
- 39: Übertragungsrichtung
- 41: Verstärkungskennlinie
- 43: Übertragungsrichtung
- 45: Übertragungsrichtung
- 47: korrigierte Verstärkungskennlinie
- 49: nicht-flüchtiger Speicher
- 51: neuromorpher Chip
- 53: künstliches neuronales Netz
- 55: erste Datei
- 57: Übertragungsrichtung
- 59: erstes neuronales Muster-Netz
- 61: Applikation

## Patentansprüche

1. Verfahren zur Anpassung von Parametern eines Hörsystems (1), das ein Hörhilfegerät (3) und ein von diesem getrenntes Kommunikationsgerät (5) umfasst,
- wobei mittels einer Kamera (14) des Kommunikationsgerätes (5) zumindest ein Bild von zumindest einem Bauteil (9, 10) zur akustischen Ankopplung des Hörhilfegerätes (3) an das Ohr eines Hörgeräteträgers aufgenommen wird,
- wobei anhand des oder jedes aufgenommenen Bildes die Produktidentität des oder jedes Bauteils (9, 10) identifiziert wird,
- wobei dem oder jedem vorab identifizierten Bauteil (9, 10) akustische Übertragungskennlinien (35) zugeordnet werden, und
- wobei auf Basis dieser akustischen Übertragungskennlinien (35) die Anpassung der Parameter des Hörsystems (1) erfolgt,
**dadurch gekennzeichnet, dass**
die Produktidentität des oder jedes Bauteils (9, 10) anhand des oder jedes aufgenommenen Bildes auf dem Kommunikationsgerät (5) mittels eines dort implementierten künstlichen neuronalen Netzes (53) identifiziert wird, anhand dessen ein elektronischer Produktkatalog (33) hinterlegt ist,
wobei verschiedene Produkte des elektronischen Produktkatalogs (33) über Verbindungen zwischen einzelnen Neuronen und/oder einzelne Neuronen einer Ausgangsschicht des künstlichen neuronalen Netzes hinterlegt sind.

2. Verfahren nach Anspruch 1,
- wobei an das Hörhilfegerät (3) das wenigstens eine Bauteil (9, 10) zur akustischen Ankopplung des Hörhilfegerätes (3) an das Ohr des Hörgeräteträgers angebracht wird, und
- wobei mittels der Kamera (14) des Kommunikationsgerätes (5) das zumindest eine Bild von dem oder jedem zur akustischen Ankopplung eingesetzten Bauteil (9, 10) aufgenommen wird.

3. Verfahren nach Anspruch 1,
wobei das zumindest eine Bild von dem oder jedem Bauteil (9, 10) aufgenommen wird, während das oder jedes Bauteil (9, 10) vom Hörhilfegerät (3) getrennt ist.

4. Verfahren nach einem der vorhergehenden Ansprüche ,
wobei das künstliche neuronale Netz (53) im Kommunikationsgerät (5) mittels wenigstens eines neuromorphen Chips (51) implementiert wird.

5. Verfahren nach einem der vorhergehenden Ansprüche ,
wobei in einer Trainingsphase getrennt vom Hörsystem (1)
- jeweils Bilder der Produkte des elektronischen Produktkatalogs (33) aufgenommen werden, und
- ein generisches künstliches neuronales Netz für eine Bilderkennung der jeweiligen Produkte in den aufgenommenen Bildern eingerichtet wird, und hierdurch ein erstes neuronales Muster-Netz (59) implementiert wird,
wobei die Topologie und/oder Verbindungen zwischen einzelnen Neuronen des ersten neuronalen Muster-Netzes (59) in einer ersten Datei (55) gespeichert werden,
wobei die erste Datei (55) auf das Kommunikationsgerät (5) übertragen wird, und
wobei im Kommunikationsgerät (5) das künstliche neuronale Netz (53) des Kommunikationsgerätes (5) gemäß der auf der ersten Datei (55) gespeicherten Topologie bzw. den Verbindungen des ersten neuronalen Muster-Netzes (59) implementiert wird, und hierdurch im Kommunikationsgerät (5) der elektronische Produktkatalog (33) hinterlegt wird.

6. Verfahren nach Anspruch 5,
wobei für eine Änderung des elektronischen Produktkataloges (33)
- ein dem geänderten elektronischen Produktkatalog (33) entsprechendes, zweites neuronales Muster-Netz erzeugt wird, dessen Topologie und/oder Verbindungen in einer zweiten Datei gespeichert werden,
- wobei die zweite Datei auf das Kommunikationsgerät (5) übertragen wird, und
- wobei durch eine Implementierung des zweiten neuronalen Muster-Netzes im Kommunikationsgerät (5) anhand der zweiten Datei der elektronische Produktkatalog (33) im Kommunikationsgerät (5) geändert wird.

7. Verfahren nach einem der vorhergehenden Ansprüche,
wobei in dem elektronischen Produktkatalog (33) die akustischen Übertragungskennlinien (35) für das oder jedes identifizierte Bauteil (9, 10) aufgefunden werden.

8. Verfahren nach einem der vorhergehenden Ansprüche,
wobei die akustischen Übertragungskennlinien (35) für das oder jedes identifizierte Bauteil (9, 10) auf das Kommunikationsgerät (5) übertragen werden.

9. Verfahren nach einem der vorhergehenden Ansprüche,
wobei eine Verstärkungskennlinie (41) für das Hörgerät (3) berechnet wird.

10. Verfahren nach Anspruch 9,
wobei die Verstärkungskennlinie (41) für das Hörgerät (3) mittels des Kommunikationsgerätes (5) berechnet wird.

11. Verfahren nach Anspruch 9 oder 10,
wobei anhand der akustischen Übertragungskennlinien (35) und der Verstärkungskennlinie (41) eine korrigierte Verstärkungskennlinie (47) für das Hörgerät (3) berechnet wird.

12. Verfahren nach Anspruch 11,
wobei anhand der korrigierten Verstärkungskennlinie (47) die Verstärkung des Hörgerätes (3) angepasst wird.

13. Verfahren nach einem der vorhergehenden Ansprüche,
wobei das zumindest eine Bild von dem Bauteil (9, 10) aufgenommen wird, während dieses vom Hörgeräteträger nicht am Ohr getragen wird.

14. Hörsystem (1), umfassend ein Hörhilfegerät (3) mit zumindest einem Bauteil (9, 10) zur akustischen Ankopplung des Hörhilfegerätes (3) an das Ohr eines Hörgeräteträgers, sowie umfassend ein von dem Hörhilfegerät (3) getrenntes Kommunikationsgerät (5) mit einer Kamera (14) zur Aufnahme zumindest eines Bildes von dem oder jedem zur akustischen Ankopplung eingesetzten Bauteil (9, 10),
wobei das Hörsystem (1) zur Identifizierung der Produktidentität des oder jedes Bauteils (9, 10) anhand des oder jedes aufgenommenen Bildes sowie zur Zuordnung von akustischen Übertragungskennlinien (35) zu dem oder jedem vorab identifizierten Bauteil (9, 10) ausgebildet ist,
wobei zur Identifizierung der Produktidentität auf dem Kommunikationsgerät (5) ein künstliches neuronales Netz (53) implementiert ist, anhand dessen ein elektronischer Produktkatalog (33) hinterlegt ist,
wobei verschiedene Produkte des elektronischen Produktkatalogs (33) über Verbindungen zwischen einzelnen Neuronen und/oder einzelne Neuronen einer Ausgangsschicht des künstlichen neuronalen Netzes hinterlegt sind, und
wobei die Parameter des Hörsystems (1) auf Basis der akustischen Übertragungskennlinien (35) anpassbar sind.

15. Hörsystem nach Anspruch 14,
wobei das Kommunikationsgerät (5) einen neuromorphen Chip (51) zur Implementierung des künstlichen neuronalen Netzes (53) aufweist, anhand dessen der verschiedene Produktidentitäten umfassende elektronische Produktkatalog (33) implementiert ist.

## Claims

1. Method for adjusting parameters of a hearing system (1), said hearing system comprising a hearing aid device (3) and a communication device (5) being separate from said hearing aid device,
- wherein by means of a camera (14) of the communication device (5) at least one image of at least one component (9, 10) for acoustic coupling of the hearing aid device (3) to the ear of a hearing aid wearer is captured
- wherein the or each captured image is used to identify the product identity of the or each component (9, 10),
- wherein acoustic transfer characteristics (35) are assigned to the or each previously identified component (9, 10), and
- wherein the adjustment of the parameters of the hearing system (1) is based on said acoustic transfer characteristics (35),
**characterized in that**
the product identity of the or each component (9, 10) is identified on the basis of the or each captured image on the communication device (5) by means of an artificial neural network (53) implemented there, on the basis of which an electronic product catalog (33) is deposited,
wherein different products of the electronic product catalog (33) are deposited via connections between individual neurons and/or via individual neurons of an output layer of the artificial neural network.

2. Method according to claim 1,
- wherein the at least one component (9, 10) for acoustic coupling of the hearing aid device (3) to the ear of the hearing aid wearer is fitted to the hearing aid device (3), and
- wherein by means of the camera (14) of the communication device (5) the at least one image of the or each component (9, 10) used for acoustic coupling is captured.

3. Method according to claim 1,
wherein the at least one image is captured of the or each component (9, 10) while the or each component (9, 10) is separate from the hearing aid device (3).

4. Method according to one of the preceding claims,
wherein the artificial neural network (53) is implemented in the communication device (5) by means of at least one neuromorphic chip (51).

5. Method according to one of the preceding claims,
wherein in a training phase, separate from the hearing system (1),
- respective images of the products of the electronic product catalog (33) are captured, and
- a generic artificial neural network is implemented for image recognition of the respective products in the captured images, and thereby a first prototype neural network (59) is implemented,
wherein the topology and/or connections between individual neurons of the first prototype neural network (59) are stored in a first file (55),
wherein the first file (55) is transferred to the communication device (5), and wherein in the communication device (5) the artificial neural network (53) of the communication device (5) is implemented in accordance with the topology stored on the first file (55) and/or the connections of the first prototype neural network (59), respectively, and thereby the electronic product catalog (33) is deposited in the communication device (5).

6. Method according to claim 5,
wherein for a modification of the electronic product catalog (33)
- a second prototype neural network corresponding to the modified electronic product catalog (33) is generated, the topology and/or connections of which are stored in a second file,
- wherein the second file is transferred to the communication device (5), and
- wherein, by an implementation of the second prototype neural network in the communication device (5), the electronic product catalog (33) in the communication device (5) is modified based on the second file.

7. Method according to one of the preceding claims,
wherein the acoustic transfer characteristics (35) for the or each identified component (9, 10) are retrieved from the electronic product catalog (33).

8. Method according to one of the preceding claims,
wherein the acoustic transfer characteristics (35) for the or each identified component (9, 10) are transferred to the communication device (5).

9. Method according to any of the foregoing claims,
wherein a gain characteristic (41) is calculated for the hearing aid device (3)

10. Method according to claim 9,
wherein the gain characteristic (41) for the hearing aid device (3) is calculated by means of the communication device (5).

11. Method according to claim 9 or 10,
wherein a corrected gain characteristic (47) for the hearing aid device (3) is calculated on the basis of the acoustic transfer characteristics (35) and the gain characteristic (41).

12. Method according to claim 11,
wherein the gain of the hearing aid device (3) is adjusted on the basis of the corrected gain characteristic (47).

13. Method according to one of the preceding claims,
wherein the at least one image is captured of the component (9, 10) while it is not worn on the ear by the hearing aid wearer.

14. Hearing system (1), comprising a hearing aid device (3) with at least one component (9, 10) for acoustic coupling of the hearing aid device (3) to the ear of a hearing aid wearer, as well as comprising a communication device (5) with a camera (14) for capturing at least one image of the or each component (9, 10) used for acoustic coupling, said communication device (5) being separate from the hearing aid device (3),
- wherein the hearing system (1) is configured to identify the product identity of the or each component (9, 10) based on the or each captured image, and to assign acoustic transfer characteristics (35) to the or each previously identified component (9, 10),
- wherein, for identifying the product identity, an artificial neural network (53) is implemented on the communication device (5), on the basis of which an electronic product catalog (33) is deposited,
- wherein different products of the electronic product catalog (33) are deposited via connections between individual neurons and/or via individual neurons of an output layer of the artificial neural network, and
- wherein the parameters of the hearing system (1) are adjustable on the basis of the acoustic transfer characteristics (35).

15. Hearing system according to claim 14,
wherein the communication device (5) comprises a neuromorphic chip (51) for implementing the artificial neural network (53), on the basis of which the electronic product catalog (33) comprising various product identities is implemented.

## Revendications

1. Procédé pour l'adaption des paramètres d'un système auditif (1) qui comprend une aide auditive (3) et un dispositif de communication (5) séparé de ladite aide auditive
- dans lequel au moyen d'une caméra (14) du dispositif de communication (5) au moins une image d'au moins un composant (9, 10) est enregistrée pour le couplage acoustique de l'aide auditive (3) à l'oreille d'un porteur de l'aide auditive,
- dans lequel l'identité du produit du ou de chaque composant (9, 10) est identifiée sur la base de l'image ou de chaque image enregistrée,
- dans lequel les caractéristiques de transmission acoustique (35) sont associées au ou à chaque composant préalablement identifié (9, 10), et
- dans lequel l'adaptation des paramètres du système auditif (1) se fait sur la base de ces caractéristiques de transmission acoustique (35),
**caractérisé en ce que**
l'identité du produit du ou de chaque composant (9, 10) est identifiée sur la base de la ou de chaque image enregistrée sur le dispositif de communication (5) au moyen d'un réseau neuronal artificiel (53) qui est mis en œuvre, sur la base duquel un catalogue électronique de produits (33) est déposé, dans lequel différents produits du catalogue électronique de produits (33) sont déposés via des connexions entre des neurones individuels et/ou des neurones individuels d'une couche de sortie du réseau neuronal artificiel.

2. Procédé selon la revendication 1,
- dans lequel le au moins un composant (9, 10) est fixé à l'aide auditive (3) pour le couplage acoustique de l'aide auditive (3) à l'oreille de l'porteur de l'aide auditive, et
- dans lequel au moyen de la caméra (14) du dispositif de communication (5) la ou les images du ou de chaque composant (9, 10) utilisé pour le couplage acoustique sont enregistrées.

3. Procédé selon la revendication 1,
dans lequel au moins une image est enregistrée du ou de chaque composant (9, 10) alors que le ou chaque composant (9, 10) est séparé de l'aide auditive (3).

4. Procédé selon l'une des revendications précédentes,
dans lequel le réseau neuronal artificiel (53) est implémenté dans le dispositif de communication (5) au moyen d'au moins une puce neuromorphe (51).

5. Procédé selon l'une des revendications précédentes,
dans lequel dans une phase de formation distincte du système auditif (1)
- des images des produits dans le catalogue électronique de produits (33) sont respectivement enregistrées, et
- un réseau neuronal artificiel générique est mis en place pour la reconnaissance des produits respectifs dans les images enregistrées, et un premier réseau neuronal modèle (59) est ainsi mis en oeuvre
dans lequel la topologie et/ou les connexions entre les différents neurones du premier réseau neuronal modèle (59) sont stockées dans un premier fichier (55), dans lequel le premier fichier (55) est transmis au dispositif de communication (5), et
dans lequel dans le dispositif de communication (5) le réseau neuronal artificiel (53) du dispositif de communication (5) est implémenté sur le premier fichier (55) selon la topologie stockée, respectivement selon les connexions du premier réseau neuronal modèle (59), et le catalogue électronique de produits (33) est ainsi déposé dans le dispositif de communication (5).

6. Procédé selon la revendication 5,
dans lequel, pour une modification du catalogue électronique de produits (33)
- un deuxième réseau neuronal modèle correspondant au catalogue électronique de produits modifié (33) est généré, dont la topologie et/ou les connexions sont stockées dans un deuxième fichier,
- dans lequel le deuxième fichier est transmis au dispositif de communication (5), et
- dans lequel, par une implémentation du deuxième réseau neuronal modèle dans le dispositif de communication (5), le catalogue électronique de produits (33) est modifié dans le dispositif de communication (5) sur la base du deuxième fichier.

7. Procédé selon l'une des revendications précédentes,
dans lequel les caractéristiques de transmission acoustique (35) pour le ou chaque composant identifié (9, 10) sont extraites du catalogue électronique de produits (33).

8. Procédé selon l'une des revendications précédentes,
dans lequel les caractéristiques de transmission acoustique (35) du ou de chaque composant identifié (9, 10) sont transmises au dispositif de communication (5).

9. Procédé selon l'une des revendications précédentes,
dans lequel une caractéristique d'amplification (41) est calculée pour l'aide auditive (3).

10. Procédé selon la revendication 9,
dans lequel la caractéristique d'amplification (41) de l'aide auditive (3) est calculée au moyen du dispositif de communication (5).

11. Procédé selon la revendication 9 ou 10,
dans lequel une caractéristique d'amplification corrigée (47) pour l'aide auditive (3) est calculée sur la base des caractéristiques de transmission acoustique (35) et de la caractéristique d'amplification (41).

12. Procédé selon la revendication 11,
dans lequel l'amplification de l'aide auditive (3) est ajustée sur la base de la courbe caractéristique d'amplification corrigée (47).

13. Procédé selon l'une des revendications précédentes,
dans lequel la ou les images sont enregistrées par le composant (9, 10) alors qu'il n'est pas porté à l'oreille par le porteur de l'aide auditive.

14. Système auditif (1), comprenant une prothèse auditive (3) avec au moins un composant (9, 10) pour le couplage acoustique de l'aide auditive (3) à l'oreille d'un porteur de l'aide auditive, ainsi qu'un dispositif de communication (5) séparé de l'aide auditive (3) avec une caméra (14) pour enregistrer au moins une image du ou de chaque composant (9, 10) utilisé pour le couplage acoustique,
dans lequel le système auditif (1) est configuré pour identifier l'identité du produit du ou de chaque composant (9, 10) sur la base de la ou de chaque image enregistrée et pour associer des caractéristiques de transmission acoustique (35) au ou à chaque composant (9, 10) précédemment identifié,
dans lequel, pour identifier l'identité du produit, un réseau neuronal artificiel (53) est mis en oeuvre sur le dispositif de communication (5), sur la base duquel un catalogue électronique de produits (33) est stocké,
dans lequel différents produits du catalogue électronique de produits (33) sont déposés via des connexions entre des neurones individuels et/ou des neurones individuels d'une couche de sortie du réseau neuronal artificiel, et
dans lequel les paramètres du système auditif (1) peuvent être ajustés sur la base des caractéristiques de transmission acoustique (35).

15. Aide auditive selon la revendication 14,
dans lequel le dispositif de communication (5) comporte une puce neuromorphique (51) pour la mise en oeuvre du réseau neuronal artificiel (53), sur la base duquel le catalogue électronique de produits (33) comprenant diverses identités de produits est mis en œuvre.
